Europäisches Patentamt

European Patent Office

Office européen des brevets

(11) Publication number: **0 264 861**
**A2**

## EUROPEAN PATENT APPLICATION

(21) Application number: **87115192.4**

(22) Date of filing: **16.10.87**

(51) Int. Cl.⁴: **C08F 114/06** , C08F 2/20 ,
C09D 3/74 , C09D 5/03

(30) Priority: **24.10.86 US 922644**

(43) Date of publication of application:
**27.04.88 Bulletin 88/17**

(84) Designated Contracting States:
**DE FR GB**

(71) Applicant: **AIR PRODUCTS AND CHEMICALS, INC.**
**P.O. Box 538**
**Allentown, Pennsylvania 18105(US)**

(72) Inventor: **Shaw, Lane George**
**4 Pine Needle Cover**
**Fogelsville, PA 18051(US)**

(74) Representative: **Kador & Partner**
**Corneliusstrasse 15**
**D-8000 München 5(DE)**

(54) **Process for producing suspension polyvinyl chloride for powder coating applications.**

(57) A method for making vinyl chloride suspension polymer having a weight average molecular weight less than 100,000 and a high porosity which is suitable for powder coating applications. The suspension polymerization is performed using a polyvinyl alcohol suspension system consisting essentially of 0.03 to 0.05 wt% polyvinyl alcohol which is 65 to 75 mole% hydrolyzed and at least 0.15 wt% polyvinyl alcohol which is 30 to 40 mole% hydrolyzed.

EP 0 264 861 A2

# PROCESS FOR PRODUCING SUSPENSION POLYVINYL CHLORIDE FOR POWDER COATING APPLICATIONS

## TECHNICAL FIELD

The present invention relates to a process for the aqueous suspension polymerization of vinyl chloride monomer.

## BACKGROUND OF THE INVENTION

Polyvinyl chloride polymers for powder coating applications have historically been made by the bulk polymerization process. The reasons are two fold: (1) very high porosity resins can be manufactured by the bulk polymerization process, and (2) bulk resins have no pericellular membrane to interfere with the melting and fusion process critical in powder coating resins.

In the manufacture of polyvinyl chloride by the aqueous suspension polymerization process, it is desired to achieve or control certain properties in the polyvinyl chloride particles, for example, bulk density, porosity and particle size distribution which properties are often interrelated.

The following prior art attempted to manipulate the properties of the polyvinyl chloride resin via the use of certain polyvinyl alcohol suspension systems in the aqueous suspension polymerization process:

U.S. 2,812,318 discloses that certain partially hydrolyzed polyvinyl esters can be successfully employed in the suspension polymerization of vinyl chloride in a water-alcohol solution to produce granular polyvinyl chloride of uniform particle size and which has an improved rate of plasticizer absorption. The polyvinyl ester should be hydrolyzed to a degree between 25 and 65%.

U.S. 4,258,163 discloses the homo-and copolymerization of vinyl chloride using at least one known protective colloid together with a 30-65 mole% saponified polyvinyl acetate.

U.S. 3,592,800 discloses the polymerization of vinyl chloride in aqueous suspension in the presence of from 0.01-0.5 wt% of a polyvinyl alcohol or cellulose ether as a protective colloid having a viscosity of more than 20 cps, and by adding together with the protective colloid 0.01-1.0 wt% of a polyvinyl alcohol which contains from 2-25 wt% of acetyl groups and has a viscosity of from 1-8 cps.

U.S. 3,929,753 discloses a method for producing polyvinyl chloride having a high bulk density wherein the polymerization reaction is initiated in the presence of a partially saponified polyvinyl alcohol having 70-80 mole% of saponification degree and 500-900 average degree of polymerization as a suspension stabilizer, and when the polymerization conversion becomes 3-40 wt%, a partially saponified polyvinyl alcohol having 75-95 mole% of saponification degree and 1000 or more of average degree of polymerization is added to the polymerization system.

U.S. 4,143,224 discloses the manufacture of vinyl chloride polymers using a mixture of suspending agents containing (a) a partly acetylated polyvinyl alcohol having 5-25 wt% acetate units, (b) at least one of methyl cellulose, methylhydroxyethyl cellulose, methylhydroxypropyl cellulose. hydroxyethyl cellulose and hydroxypropyl cellulose and (c) a partly acetylated polyvinyl alcohol having 31-35 wt% acetate units.

U.S. 4,208,499 discloses a dispersing stabilizer for suspension polymerization of vinyl compounds comprising a water soluble protective colloid and a carbonyl group-containing polyvinyl alcohol having an average degree of hydrolysis of 10-90 mole%.

U.S. 4,324,878 discloses a process for producing vinyl chloride polymer which comprises polymerizing vinyl chloride monomer in aqueous suspension in the presence of a primary suspending agent able to control the granulometric distribution of the particles of polyvinyl chloride obtained, as well as a secondary suspending agent consisting of partially hydrolyzed polyvinyl acetate having a saponification number between 520 and 600 and a viscosity, measured in a 4% methanol solution at 20°C, between 0.5 and 2 cps.

U.S. 4,345,056 discloses producing polyvinyl chloride by the suspension process in the presence of protective colloids by utilizing a protective colloid mixture of from 20-80% of the protective colloid mixture of a polyvinyl acetate having the hydrolysis degree of 40-55 mole% and the remainder of the protective colloid mixture of (1) a water-soluble polyvinyl alcohol having a hydrolysis degree of 70-90 mole%, or (2) an amino ethyl-hydroxypropyl cellulose, or (3) a vinyl acetate/vinyl pyrrolidone copolymer.

## SUMMARY OF THE INVENTION

The invention provides a method for making vinyl chloride polymer resins having a weight average molecular weight ($\bar{M}$ w) of less than 100,000 and a uniformly high porosity, the resins being suitable for use in powder coatings application. The suspension polymerization of vinyl chloride monomers is conducted using a suspension system consisting essentially of two different polyvinyl alcohols. The suspension system consists essentially of

(a) 0.03 to 0.05 wt% of a polyvinyl alcohol which is 65 to 75 mole% hydrolyzed and

(b) at least 0.15 wt% of a polyvinyl alcohol which is 30 to 40 mole% hydrolyzed.

The use of this seemingly excessive amount of secondary suspending agent causes two effects necessary for the critical powder coating application. First, it reduces the size of the primary particles within the polyvinyl chloride grain, thus raising the surface to volume ratio and allowing plasticization of the primary particles by the plasticizer. Secondly, very high porosity is gained, allowing complete and uniform plasticization of the resin grain in its entirety.

The result is a suspension resin with powder coating properties equivalent to currently supplied bulk polymerized powder coating polyvinyl chloride resins.

## DETAILED DESCRIPTION OF THE INVENTION

The invention is directed to the aqueous suspension polymerization of vinyl chloride monomer and optionally up to 20 wt% of an ethylenically unsaturated copolymerizable monomer using a suspension system containing two grades of polyvinyl alcohol with different degrees of hydrolysis.

The polyvinyl alcohol suspension system consists essentially of

(a) 0.03 to 0.05 wt% of a polyvinyl alcohol which is 65 to 75 mole%, preferably 70 to 73 mole%, hydrolyzed and has a viscosity of 5 to 7.5 cps, preferably 6 to 6.5 cps as a 4% aqueous solution at 20°C, and

(b) 0.15 to 0.35 wt% of a polyvinyl alcohol which is 30 to 40 mole%, preferably 34 to 36 mole%, hydrolyzed and has a viscosity of 50 to 150 cps, preferably 90 to 110 cps as a 4% methanolic solution at 20°

It is preferred that the more hydrolyzed polyvinyl alcohol be used in amounts ranging from 0.04 to 0.05 wt% and the lesser hydrolyzed polyvinyl alcohol be used in amounts ranging from 0.16 to 0.20 wt%. The weight percent of the polyvinyl alcohols is based on the amount of vinyl chloride monomer used in the recipe.

Illustrative of the ethylenically unsaturated copolymerizable monomers suitable for the suspension polymerization reaction are vinyl esters of $C_1$-$C_4$ alkanoic acids, especially vinyl acetate, $C_2$-$C_4$ olefins, particularly ethylene and propylene, acrylates, methacrylates and acrylonitrile. While up to 20 wt% of these copolymerizable monomers. may be present in the monomer mixture, it is preferred that 0.5-10 wt% be present when such monomers are included.

The suspension polymerization reaction can be conducted at temperatures ranging from 30-90°C, preferably at moderately elevated temperatures generally from about 50-80°C. If the polymerization is conducted outside of the temperature range, the molecular weight of the polyvinyl chloride resins may be either too high or too low and unsuitable for powder coating applications.

In carrying out the polymerization operation, an aqueous mixture containing from 0.1 to about 0.5 wt% free radical initiator is charged into a suitable reaction vessel containing the aqueous medium. The initiator may be incorporated into the reaction mixture in a single step, or alternatively, incrementally added as polymerization progresses. With incremental multiple additions a major amount may be used at the beginning of the cycle with aliquot portions of the balance being added during the cycle.

Free radical initiators conventionally used to initiate polymerization are suggested including for example, aliphatic diacyl peroxides such as lauroyl peroxide and decanoyl peroxide, acylperoxycarbonic esters; peroxydicarbonates such as sec-butyl peroxydicarbonate and diisopropyl peroxydicarbonate; t-alkyl peresters of t-hydroperoxides such as t-butyl peroxyneodecanoate and t-butyl peroxypivalate; azo-nitrile catalysts such as azo-bis-isobutyronitrile and the like.

After adding the polyvinyl alcohol suspending system as an aqueous mixture·to the reaction vessel, the reactor is capped and flushed with nitrogen followed by vinyl chloride monomer in the vapor form. Once agitation begins, the vinyl chloride (liquid) and any additional monomers are introduced. The system is then brought to a reaction temperature from about 30-90°C and, more optimally, from about 50-80°C with appropriate agitation. The aqueous initiator mixture is then added and the suspension polymerization reaction carried out.

The resulting polyvinyl chloride resin will have a $\overline{M}$w of less than 100,000, for example 50,000 to 85,000, preferably 60,000 to 65,000, and is most desirably used in powder coating applications. A general formulation of polyvinyl chloride resin coating powder is the following:

PVC Resin         100 pbw
Stabilizer        2 to 5 pbw
Pigment           5 to 15 pbw
Plasticizer       20 to 100 pbw
Dispersion-grade PVC     2 to 10 pbw

The stabilizer, pigment, plasticizer and dispersion-grade polyvinyl chloride components are those typically used by a worker skilled in the art of polyvinyl chloride coating powders. Reference is made to Kirk-Othmer, "Encyclopedia of Chemical Technology", 3rd Ed., Vol. 19, "Powder Coatings", pp 1-5, John Wiley & Sons (1982) and, E. P. Miller and D. D. Taft, Fundamental of Powder Coating, 1964, Society of Manufacturing Engineers, pp 164-177.

The coating powder is applied by a simple procedure which comprises fluidizing a bed of the polyvinyl chloride-containing coating powder composition, contacting a substrate heated to a temperature above the melting point of the coating powder composition, usually about 500-550°F, with the fluidized coating powder composition for a time sufficient to afford the desired degree of coating on the substrate and removing the coated substrate from the fluidized bed. As is well known in the art, the substrate typically is metal or ceramic with the substrate precoated with a primer usually of an epoxy-acrylic base in order to obtain strong adhesion.

In the following examples the porosity of the vinyl chloride polymers was measured by the irreversible plasticizer take-up (IPTU) which is the grams of dioctyl phthalate (DOP) absorbed by 100 grams of polymer resin. The procedure for the measurement of IPTU values was ASTM D 3367 and for the inherent viscosity (IV) was ASTM D 1243-79.

The powder coating test comprised compounding the polyvinyl chloride resin into the following coating powder formulation:

PVC Resin       100 pbw
Tin Mercaptide Stabilizer     2.5 pbw
Titanium Dioxide       10 pbw
DOP Plasticizer       50 pbw
PVC Dispersion Resin     5 pbw

A small pile of the formulation was placed onto a metal plate heated to 550°F. The excess was immediately shaken off and the melting behavior observed. Ratings of 1 (poor) to 5 (excellent) were assigned based on the quickness of a smooth film being formed.

## EXAMPLE

Four runs were made to prepare polyvinyl chloride resin for powder coating applications.

### TABLE

| REACTION CHARGE | RUN | | | |
|---|---|---|---|---|
| | 1 | 2 | 3 | 4 |
| Water (lb) | 16,724 | 16,724 | 16,724 | 16,724 |
| Vinyl Chloride Monomer (lb) | 11,300 | 11,300 | 11,300 | 11,300 |
| 72.5 mole% Hydrolyzed PVOH[a] (lb) [wt% VCM] | 5.0 [0.044%] | 5.0 [0.044%] | 5.0 [0.044%] | 5.0 [0.044%] |
| 35 mole% Hydrolyzed PVOH[b] (lb) [wt% VCM] | 26 [0.08%] | 40 [0.10%] | 55 [0.16%] | 60 [0.18%] |
| Initiator (lb) | 4.0 | 4.0 | 4.0 | 4.0 |
| Powder Coating Rating | 1.5 | 3 | 4.5 | 5 |
| IPTU | 20 | 25 | 32 | 33 |
| IV | 0.674 | 0.681 | 0.675 | 0.678 |

[a] Viscosity of 5 to 75 cps as a 4% aqueous solution at 20°C

[b] Viscosity of 50 to 150 cps as a 4% methanolic solution at 20°C

The water and the two polyvinyl alcohols were added to a 3,700 gal. reactor which was then capped and flushed with nitrogen followed by vinyl chloride vapor. The liquefied vinyl chloride was then added. After raising the reactor temperature to about 71°C and agitating the aqueous reaction medium at 130 rpm, the initiator was forced into the reactor. The total polymerization time was 4 hours. The resulting product from each run was evaluated for powder coating application.

For comparative purposes, B. F. Goodrich's GEON 140 X42, a bulk PVC resin used in powder coating applications, had a rating of 5 in the powder coating test. It can be seen from the data in the Table that the use of at least about 0.15 wt% of a 35 mole% hydrolyzed polyvinyl alcohol as the secondary suspending agent in combination with a 72.5 mole% hydrolyzed polyvinyl alcohol yielded a polyvinyl chloride resin eminently suitable for use in a coating powder composition.

## STATEMENT OF INDUSTRIAL APPLICATION

The use of the polyvinyl alcohol suspension system according to the invention in the suspension polymerization of vinyl chloride monomer affords production of vinyl chloride polymer resin suitable for powder coating applications.

## Claims

1. In the aqueous suspension polymerization of vinyl chloride monomer, the method for producing a vinyl chloride polymer having a $\bar{M}$w of less than 100,000 and suitable for powder coatings applications which comprises conducting the suspension polymerization reaction using a suspension system consisting essentially of (a) 0.03 to 0.05 wt% polyvinyl alcohol which is 65 to 75 mole% hydrolyzed and (b) at least 0.15 wt% polyvinyl alcohol which is 30 to 40 mole% hydrolyzed, the wt% of the polyvinyl alcohols based on vinyl chloride monomer.

2. The method of Claim 1 in which polyvinyl alcohol (a) is 70 to 73 mole% hydrolyzed.

3. The method of Claim 1 in which polyvinyl alcohol (b) is 34 to 36 mole% hydrolyzed.

4. The method of Claim 1 in which the suspension system contains 0.04 to 0.05 wt% polyvinyl alcohol (a).

5. The method of Claim 1 in which the suspension system contains 0.16 to 0.20 wt% polyvinyl alcohol (b).

6. The method of Claim 1 in which polyvinyl alcohol (a) has a viscosity of 5 to 7.5 cps as a 4% aqueous solution at 20°C and polyvinyl alcohol (b) has a viscosity of 50 to 150 cps as a 4% methanolic solution at 20°C.

7. In the aqueous suspension polymerization of vinyl chloride monomer, the method for producing a vinyl chloride polymer having a $\bar{M}$w of 50,000 to 85,000 and suitable for powder coatings applications which comprises conducting the suspension polymerization reaction using a suspension system consisting essentially of (a) 0.03 to 0.05 wt% polyvinyl alcohol which is 70 to 73 mole% hydrolyzed and has a viscosity of 5 to 7.5 cps as a 4% aqueous solution at 20 and (b) 0.15 to 0.35 wt% poly vinyl alcohol which is 34 to 36 mole% hydrolyzed and has a viscosity of 50 to 150 cps as a 4% methanolic solution at 20°C.

8. The method of Claim 7 in which the suspension system contains 0.04 to 0.05 wt% polyvinyl alcohol (a).

9. The method of Claim 7 in which the suspension system contains 0.16 to 0.20 wt% polyvinyl alcohol (b).

10. The method of Claim 7 in which polyvinyl alcohol (a) has a viscosity of 6 to 6.5 cps and polyvinyl alcohol (b) has a viscosity of 90 to 110 cps.

11. In the aqueous suspension polymerization of vinyl chloride monomer, the method for producing a vinyl chloride polymer having a $\bar{M}$w of 60,000 to 65,000 and suitable for powder coatings applications which comprises conducting the suspension polymerization reaction using a suspension system consisting essentially of (a) 0.04 to 0.05 wt% polyvinyl alcohol which is 70 to 73 mole% hydrolyzed and has a viscosity of 6 to 6.5 cps as a 4% aqueous solution at 20 and (b) 0.16 to 0.20 wt% polyvinyl alcohol which is 34 to 36 mole% hydrolyzed and has a viscosity of 90 to 110 cps as a 4% methanolic solution at 20°C.

12. A suspension polyvinyl chloride resin made according to the method of Claim 1.

13. A suspension polyvinyl chloride resin made according to the method of Claim 7.

14. A suspension polyvinyl chloride resin made according to the method of Claim 11.

15. A polyvinyl chloride resin-based coating powder consisting essentially of 100 parts polyvinyl chloride of Claim 12, 2 to 5 parts stabilizer, 5 to 15 parts pigment, 20 to 100 parts plasticizer and 2 to 10 parts dispersion-grade polyvinyl chloride.

16. A polyvinyl chloride resin-based coating powder consisting essentially of 100 parts polyvinyl chloride of Claim 13, 2 to 5 parts stabilizer, 5 to 15 parts pigment, 20 to 100 parts plasticizer and 2 to 10 parts dispersion-grade polyvinyl chloride.

17. A polyvinyl chloride resin-based coating powder consisting essentially of 100 parts polyvinyl chloride of Claim 14. 2 to 5 parts stabilizer, 5 to 15 parts pigment, 20 to 100 parts plasticizer and 2 to 10 parts dispersion-grade polyvinyl chloride.

18. A method for applying a coating powder to a substrate which comprises fluidizing the coating powder of Claim 15, contacting a substrate heated above the melting point of the coating powder for a time sufficient to afford the desired degree of coating and removing the coated substrate from the fluidized coating powder.

19. A method for applying a coating powder to a substrate which comprises fluidizing the coating powder of Claim 16, contacting a substrate heated above the melting point of the coating powder for a time sufficient to afford the desired degree of coating and removing the coated substrate from the fluidized coating powder.

20. A method for applying a coating powder to a substrate which comprises fluidizing the coating powder of Claim 17, contacting a substrate heated above the melting point of the coating powder for a time sufficient to afford the desired degree of coating and removing the coated substrate from the fluidized coating powder.